Europäisches Patentamt

European Patent Office

Office européen des brevets

(19)

(11) Veröffentlichungsnummer: **0 268 948 B1**

# EUROPÄISCHE PATENTSCHRIFT

(12)

(45) Veröffentlichungstag der Patentschrift: **29.01.92**

(51) Int. Cl.⁵: **A61C 19/00**, B65D 47/26

(21) Anmeldenummer: **87116718.5**

(22) Anmeldetag: **12.11.87**

(54) Verschlusseinrichtung für Flaschen.

(30) Priorität: **26.11.86 DE 3640424**
**11.02.87 DE 3704193**

(43) Veröffentlichungstag der Anmeldung:
**01.06.88 Patentblatt 88/22**

(45) Bekanntmachung des Hinweises auf die
Patenterteilung:
**29.01.92 Patentblatt 92/05**

(84) Benannte Vertragsstaaten:
**AT BE CH DE ES FR GB GR IT LI LU NL SE**

(56) Entgegenhaltungen:
DE-A- 2 024 598     DE-C- 200 864
FR-A- 2 290 365     US-A- 2 142 644
US-A- 3 144 867     US-A- 4 036 387

(73) Patentinhaber: **Ferton Holding**
**Fiduciaire Transjurane S.A. Rue de l'Hôpitale**
**24**
**CH-2800 Delmont(CH)**

(72) Erfinder: **Mabille, Pierre**
**G.-H. Piguet 1**
**CH-1347 Le Sentier(CH)**

(74) Vertreter: **Gauger, Hans-Peter, Dipl.-Ing. et al**
**Müller, Schupfner & Gauger Maximilianstras-**
**se 6 Postfach 10 11 61**
**W-8000 München 1(DE)**

## Beschreibung

Die Erfindung bezieht sich auf eine Verschlußeinrichtung für Flaschen der durch den Oberbegriff des Patentanspruches 1 angegebenen Gattung.

Bei einer aus der US-A-2 142 644 bekannten Verschlußeinrichtung dieser Art bildet die erste Verschlußscheibe ein mit einem Verschlußkorken für eine Thermosflasche gemeinsames Verschlußteil und weist winkelversetzt eine zweite Auslaßöffnung in einem gleichen Mittenabstand auf, über welche im Zusammenwirken mit einer auch bei der zweiten Verschlußscheibe an einer übereinstimmenden Stelle vorgesehenen zweiten Auslaßöffnung eine Belüftung für das Innere der Thermosflasche erhalten wird, sobald die zweite Verschlußscheibe in die zweite relative Drehlage gedreht ist. Die zweite Verschlußscheibe ist ebenfalls als ein mit einem Korken gemeinsames Bauteil ausgebildet und weist an ihren beiden Auslaßöffnungen je eine Anschlußröhre auf, von denen nur die Anschlußröhre der einen Auslaßöffnung über die zweite Verschlußscheibe nach oben vorsteht, so daß über dieses vorstehende Ende eine konzentrische Anordnung zu einem kurzen Führungsrohr des Aufsatzteils erhalten wird, mit welchem bei dieser bekannten Verschlußeinrichtung ein über einen Schraubverschluß an der Thermosflasche festlegbarer Verschiußdeckel ausgebildet wird. An diesem Verschlußdeckel sind die beiden Verschlußscheiben zusammen mit ihren Korken durch eine mittige Schraubverbindung befestigt, so daß beim Aufschrauben des Verschlußdeckels auf den Flaschenhals der Verschlußkorken der ersten Verschlußscheibe in die Flaschenöffnung eingepreßt wird. Mit der mittigen Schraubverbindung ist dabei dann eine zentrale Drehachse für die Drehung der zweiten Verschlußscheibe relativ zu der durch den Verschlußkorken festgelegten ersten Drehscheibe erhalten, wenn dafür die Verschlußkappe für eine Mitnahmemöglichkeit der in ihr Führungsrohr einfassenden Anschlußröhre der zweiten Verschlußscheibe zwischen den beiden relativen Drehlagen gedreht wird, die durch das Zusammenwirken eines am Umfang der zweiten Verschlußscheibe ausgebildeten Führungsvorsprunges mit einer größer bemessenen Führungsnut am Umfang der ersten Verschlußscheibe begrenzt wird.

Die durch die Patentansprüche gekennzeichnete Erfindung löst die **Aufgabe,** eine Verschlußeinrichtung der angegebenen Gattung derart auszubilden, daß damit eine auswechselbare Anordnung von gefüllten Flaschen einfach realisiert werden kann, wobei gleichzeitig eine manipulationssichere Abfüllung des Fluids auch dann noch gewährleistet sein muß, wenn die Flasche bei einer nur teilweisen Leerung von der Verschlußeinrichtung gelöst oder gegen eine neue Flasche ausgetauscht wird.

Ein Ausführungsbeispiel der erfindungsgemäßen Verschlußeinrichtung ist in der Zeichnung schematisch dargestellt und wird nachfolgend näher erläutert. Es zeigt

Fig. 1 einen Längsschnitt der Verschlußeinrichtung gemäß einer ersten Ausführungsform, wobei mit der linken Hälfte eine mit einer aufgeschraubten Verschlußkappe verschlossene Flasche und mit der rechten Hälfte deren Festlegung an einem Aufsatzteil dargestellt ist, das ein Geräteteil eines Dentalgerätes bildet;

Fig. 2 einen Längsschnitt der Verschlußeinrichtung gemäß einer zweiten Ausführungsform, wobei eine entsprechende Anschlußverbindung mit einem Aufsatzteil dargestellt ist, das ein Geräteteil eines mit Druckluft arbeitenden Dentalgerätes bildet; und

Fig. 3 eine Draufsicht der drei Verschlußscheiben, die bei der Verschlußeinrichtung gemäß Fig.2 verwendet sind.

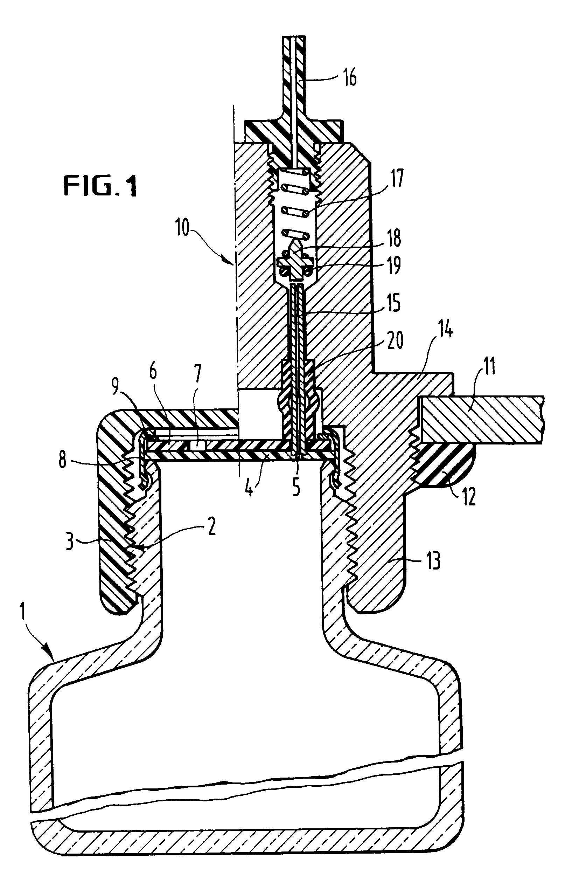

In Fig.1 ist eine Flasche 1 gezeigt, die an einem die Flaschenöffnung bildenden Hals einen Drehverschluß 2 aufweist, durch den eine Verschlußkappe 3 am Flaschenhals festlegbar ist. Der Drehverschluß 2 ist als ein Schraubverschluß ausgebildet, um die mit einem Innengewinde versehene Verschlußkappe mit mehreren Drehungen auf ein komplementär ausgebildetes Außengewinde am Flaschenhals aufschrauben zu können.

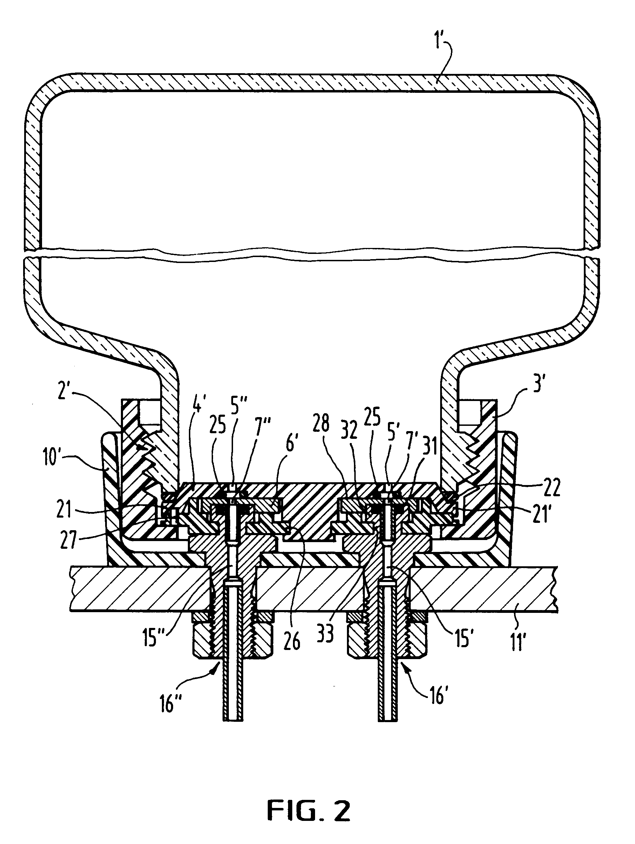

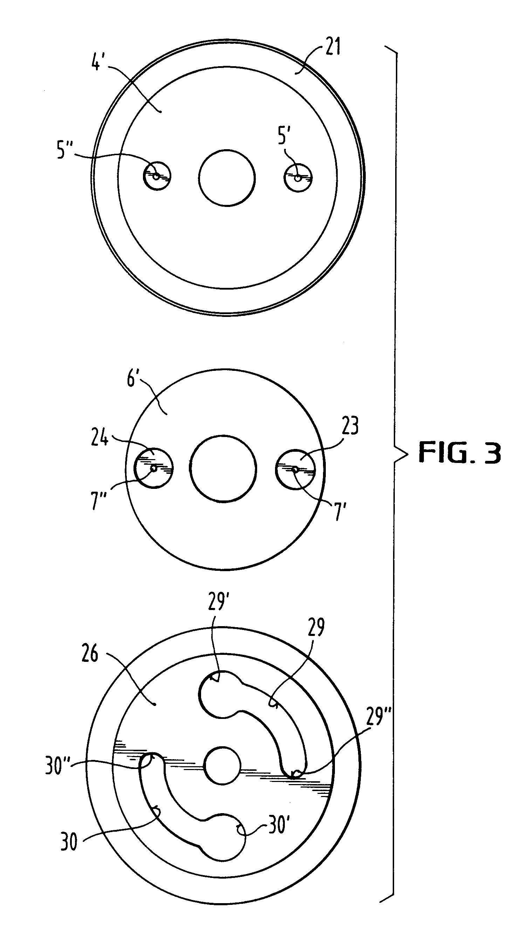

Die Flaschenöffnung ist mit einer auf den Öffnungsrand aufgelegten Verschlußscheibe 4 abgedeckt, die eine außermittig ausgebildete erste Auslaßöffnung 5 sowie eine mit einem gleichen Mittenabstand winkelversetzt ausgebildete zweite Auslaßöffnung aufweist, die beide mit einer darüber angeordneten zweiten Verschlußscheibe 6 abgedeckt sind. Die zweite Verschlußscheibe 6 weist ebenfalls eine außermittig ausgebildete erste Auslaßöffnung 7 in einem mit der Auslaßöffnung 5 gleichen Mittenabstand auf sowie eine entsprechend winkelversetzte zweite Auslaßöffnung. Diese beiden Auslaßöffnungen der zweiten Verschlußscheibe 6 sind nur in einer einzigen relativen Drehlage fluchtend zu den beiden Auslaßöffnungen der Verschlußscheibe 4 angeordnet. Obwohl die zweiten Auslaßöffnungen der beiden Verschlußscheiben 4 und 6 in Fig.1 nicht gezeigt sind, ist ihre in bezug auf die ersten Auslaßöffnungen winkelversetzte Ausbildung aus der Darstellung in Fig.3 ableitbar, wo für zwei korrespondierende Verschlußscheiben 4' und 6' der Verschlußeinrichtung gemäß Fig.2 zwei entsprechend außermittig ausgebildete erste Auslaßöffnungen 5' und 7' sowie winkelversetzt ausgebildete zweite Auslaßöffnungen 5" und 7" gezeigt sind. Die zweiten Auslaßöffnungen der Verschlußscheiben 4 und 6 sind daher in bezug auf die ersten Auslaßöffnungen in Übereinstimmung mit dieser Darstellung diametral gegenüberliegend ausgebildet. Die beiden Verschlußscheiben 4, 6 sind im übrigen am Flaschenhals mittels einer Haltekappe 8 festgelegt, die mit einem Lagerring 9 unterlegt ist, so daß bei abgenommener Verschlußkappe 3 eine leichte relative Drehung der beiden Verschlußscheiben möglich ist.

Die rechte Hälfte der Fig.1 zeigt ein Aufsatzteil 10, das als ein Anschlußstück für die Flasche 1 ein Geräteteil eines mit Druck- oder Saugluft arbeitenden Dentalgerätes ist, das an einem Handstück mit dem in der Flasche abgefüllten Fluid versorgt wird. Das Dentalgerät kann eine Ausbildung gemäß der US-A-3 227 158 oder gemäß der US-A-3 863 628 aufweisen, wobei mit einer motorisch angetriebenen Pumpe der Versorgungsdruck zur Lieferung des Fluids an das Handstück erzeugt wird. Das Aufsatzteil 10 ist an einer Gehäusewand 11 eines solchen Dentalgerätes befestigt und weist an einer nach aussen vorstehenden rohrförmigen Teillänge 13 ein Innengewinde auf, das mit dem Innengewinde der Verschlußkappe 3 übereinstimmt. Die Flasche 1 kann daher mittels des an ihrem Flaschenhals ausgebildeten Außengewindes mit dem Aufsatzteil 10 verschraubt werden, wenn die Verschlußkappe 3 abgenommen ist. An der nach außen vorstehenden Teillänge 13 des Aufsatzteils 10 ist noch ein Außengewinde ausgebildet, auf welches zum Abdichten der Durchstecköffnung der Gehäusewand 11 ein Dichtungsring 12 aufschraubbar ist, mit dem gleichzeitig ein Ringflansch 14 des Aufsatzteils an die Innenseite der Gehäusewand dicht angezogen werden kann.

Das Aufsatzteil 10 ist mit zwei Bohrungen versehen, die in einem gleichen Mittenabstand und wechselseitig um ein gleiches Winkelmaß drehversetzt sind wie die ersten und zweiten Auslaßöffnungen der beiden Verschlußscheiben. In jeder Bohrung ist eine axial bewegliche Anschlußröhre 15 am einen Ende und ein Anschlußnippel 16 am anderen Ende angeordnet, an welchem eine Feder 17 abgestützt ist, mit der die zugeordnete Anschlußröhre nach außen vorgespannt wird. Die nach außen vorstehenden Enden der jeweils durch eine flexible Lagerbuchse 20 axial geführten Anschlußröhren 15 können daher entgegen der Vorspannung dieser Federn 17 nach innen gedrückt werden. Dabei wird an der einen Anschlußröhre mit der zugeordneten Feder auch ein Ventilkörper 18 eines Rückschlagventils vorgespannt, der mit einem aufgeschobenen O-Dichtungsring 19 den Auslaß der zugeordneten Anschlußröhre 15 abdichten kann. Bei der zweiten Anschlußröhre ist auf die Integrierung eines entsprechenden Rückschlagventils verzichtet. Die Feder 17 greift dabei indirekt an dem inneren Ende der Anschlußröhre an.

Wenn bei abgenommener Verschlußkappe 3 die Flasche 1 mit der Teillänge 13 des Aufsatzteils 10 verschraubt wird, dann werden im Zusammenwirken mit der Verschlußscheibe 6 die beiden Anschlußröhren 15 entgegen der Vorspannung iher Federn 17 zuerst axial nach innen verschoben. Die Federn drücken dann die beiden Anschlußröhren 15 zunächst in die beiden Auslaßöffnungen 7 der Verschlußscheibe 6, die somit bei der fortgesetzten Drehung der Flasche 1 mitgedreht wird und schließlich eine relative Drehlage zu der Verschlußscheibe 4 erhält, in welcher die beiden Anschlußröhren 15 auch in die beiden Auslaßöffnungen der Verschlußscheibe 4 vorgedrückt werden können. Um zu verhindern, daß während der fortgesetzten Drehung der Flasche die beiden Anschlußröhren 15 durch ihre Federn 17 durch die Anschlußöffnungen 5 der Verschlußscheibe 4 durchgedrückt werden können, sind diese Anschlußöffnungen als Stufenbohrungen ausgeführt, um Anschlagschultern für die Stirnenden der Anschlußröhren 15 zu erhalten. Sobald diese Anschlagstellung erreicht ist, werden die beiden Verschlußscheiben 4, 6 durch die Anschlußröhren 15 gegen ein gemeinsames Weiterdrehen gesichert, so daß beim abschließenden Festschrauben der Flasche 1 die axiale Ausrichtung der Anschlußröhren mit den Auslaßöffnungen der beiden Verschlußscheiben erhalten bleibt und dann nur noch das Rückschlagventil an der einen Anschlußröhre geöffnet wird, indem der O-Dichtungsring 19 unter Mitwirkung des Ventilkörpers 18 von seiner Sitzfläche abgehoben wird. Wenn daher über die andere Anschlußröhre, die an ihrem zugeordneten Anschlußnippel einen mit dem Dentalgerät gesteuerten Druckluftanschluß aufweist, Druckluft in das Innere der Flasche 1 zugeleitet wird, dann kann mit dem in der Flasche abgefüllten Fluid unter Vermittlung dieses Rückschlagventils ein mit dem zugeordneten Anschlußnippel 16 angeschlossenes Handstück versorgt werden. Mit der flexiblen Führungsbuchse 20, die beim Festschrauben der Flasche an dem Aufsatzteil 10 die in Fig.1 gezeigte Verformung erfährt, wird dafür ein genügend fluiddichter Anschluß zwischen der Flasche und dem Aufsatzteil erhalten. Wenn die Zuleitung der Druckluft unterbrochen wird, wird auch die Versorgung des Handstückes mit dem Fluid unterbrochen, wobei mit dem Ventilkörper 18 des Rückschlagventils die zugeordnete Anschlußröhre 15 verschlossen werden kann.

Wenn die Flasche 1 von dem Aufsatzteil 10 abgeschraubt wird, werden die beiden Anschlußröhren 15 zuerst aus den beiden Auslaßöffnungen der Verschlußscheibe 4 und anschließend aus den beiden Auslaßöffnungen 7 der Verschlußscheibe 6 zurückgezogen. Bei Vorgabe einer gegenüber der Ganghöhe des Schraubverschlusses um wenigstens den doppelten Wert größeren Dicke der Verschlußscheibe 6 kann dabei gewährleistet werden, daß nach dem Lösen der Anschlußröhren 15 aus den Auslaßöffnungen der Verschlußscheibe 6 wieder eine relative Drehlage der beiden Verschlußscheiben 4, 6 erhalten ist, in welcher mit der Verschlußscheibe 6 die Auslaßöffnungen 5 der Verschlußscheibe 4 abgedeckt sind, so daß wie am Anfang eine Auslaßmöglichkeit für das in der Flasche 1 abgefüllte Fluid gesperrt ist.

Bei der vorbeschriebenen Ausführungsform kann der Drehverschluß 2 alternativ auch als ein Bajonettverschluß ausgebildet sein, um einerseits die Verschlußkappe 3 und andererseits das Aufsatzteil 10 lediglich durch eine einzige Teildrehung mit dem Flaschenhals fest zu verbinden. Eine axial bewegliche Anordnung der beiden Anschlußröhren 15 ist dann nicht mehr erforderlich.

Bei der in den Fig. 2 und 3 gezeigten Ausführungsform sind gleiche Teile mit gleichen Bezugsziffern und einem Strichindex bezeichnet. Gezeigt ist eine Flasche 1′ mit einer auf dem Kopf stehenden Anordnung, die für die Verwendung bei einem Dentalgerät die normale Lage für eine mittels eines entsprechenden Aufsatzteils 10′ vermittelte Befestigung an einer Gehäusewand 11′ darstellt. Das Aufsatzteil 10′ ist mit einer Ausführungsform ausgebildet, welche die Flasche auch ohne eine vorhergehenden Abnahme einer entsprechenden Verschlußkappe 3′ befestigen läßt. Die Verschlußkappe kann auch mittels eines Bajonettverschlusses anstelle des gezeigten Schraubverschlusses am Flaschenhals festgelegt sein.

Die Verschlußeinrichtung ist mit Verschlußscheiben 4′ und 6′ gebildet, welche jeweils zwei in einem gleichen Mittenabstand diametral gegenüberliegend ausgebildete Auslaßöffnungen 5′,5″ und 7′,7″ aufweisen. Die Verschlußscheibe 4′ ist mittels eines randseitig verlaufenden Flansches 21 in der Flaschenöffnung zentriert. Der Flansch ist an einer zu seiner Abstützung am Öffnungsrand vorgesehenen Abwinklung 21′ mit einer Ringdichtung 22 unterlegt und zentriert die Verschlußscheibe 6′, um deren Drehung relativ zu der Verschlußscheibe 4′ für ein paarweise wechselseitiges Ausrichten der Auslaßöffnungen 5′,7′ und 5″,7″ bzw. deren wechselseitigen Versatz mit jeweils einer Vierteldrehung in der einen oder in der anderen Drehrichtung präzise zu erhalten.

Zur Ermöglichung dieser relativen Drehung ist über der zweiten Verschlußscheibe 6′ eine dritte Verschlußscheibe 26 angeordnet, die durch den Flansch 21 der ersten Verschlußscheibe 4′ abgestützt wird und durch einen Stift 27 oder in einer anderen geeigneten Weise drehfest verbunden. Die dazwischen angeordnete zweite Verschlußscheibe 6′ wird durch die dritte Verschlußscheibe 26 zentriert und kann sich relativ zu der dritten Verschlußscheibe 26 drehen. Die mit dem Flansch 21 erhaltene Abstützhöhe für die dritte Verschlußscheibe 26 ist dafür etwas größer als die Dicke der zweiten Verschlußscheibe 6′, die durch zwei O-Ringe 25 nach außen vorgespannt wird. Es wird damit ein Laufspalt 28 für die beiden Verschlußscheiben 4′ und 6′ erhalten, der an den Auslaßöffnungen 5′,5″ der Verschlußscheibe 4′ durch die O-Ringe 25 abgedichtet wird. In der dritten Verschlußscheibe 26 sind zwei Führungsschlitze 29 und 30 ausgebildet, die sich jeweils über eine Viertellänge einer Kreislinie erstrecken, deren Radius mit dem Mittenabstand der Auslaßöffnungen der beiden anderen Verschlußscheiben 4′,6′ übereinstimmt. Jeder Führungsschlitz 29,30 ist an seinem einen Ende mit einer Durchstecköffnung 29′,30′ versehen, deren Durchmesser dem Durchmesser zweier Aussparungen 23 und 24 entspricht, welche in der Verschlußscheibe 6′ konzentrisch zu den Auslaßöffnungen 7′,7″ ausgebildet sind. Dieser Durchmesser entspricht dem Durchmesser eines Kopfteils 32 von zwei Anschlußröhren 15′ und 15″, die Einzelteile des Aufsatzteils 10′ sind, so daß über einen Anschlußnippel 16′ der einen Anschlußröhre ein in der Flasche 1′ abgefülltes Fluid an ein angeschlossenes Handstück des Dentalgerätes weitergleitet werden kann, wenn über einen Anschlußnippel 16″ der anderen Anschlußröhre 15″ Druckluft in das Innere der Flasche zugeleitet wird.

Die Kopfteile 32 der beiden Anschlußröhren bilden das eine Arbeitselement eines Bajonettverschlusses, indem an jedem Kopfteil 32 eine hinterschnittene Ringnut 33 ausgebildet ist, deren Breite mit der Dicke der dritten Verschlußscheibe 26 und deren Kerndurchmesser mit der Breite der beiden Führungsschlitze 29,30 übereinstimmen, die ein zweites Arbeitselement des Bajonettverschlusses bilden. Die anderen Enden 29″ und 30″ der beiden Führungsschlitze ergeben bei diesem Bajonettverschluß eine Anschlagstellung für die Kopfteile 32 zur Begrenzung der Drehung der Verschlußscheibe 6′ relativ zu den beiden anderen Verschlußscheiben. In dieser Anschlagstellung sind die beiden Anschlußröhren 15′,15″ auf die Auslaßöffnungen 5′,7′ und 5″,7″ der beiden Verschlußscheiben 4′ und 6′ axial ausgerichtet, womit nur in einer einzigen relativen Drehlage der Verschlußscheibe 6′ relativ zu den drehfest miteinander verbundenden Verschlußscheiben 4′ und 26 ein Auslaß des in der Flasche 1′ abgefüllten Fluids möglich ist. In allen anderen relativen Drehlagen der Verschlußscheibe 6′ ist eine Auslaßmöglichkeit des Fluids gesperrt. Die drei Verschlußscheiben sind am Flaschenhals mittels der Verschlußkappe 3′ festgelegt, die mit einem eine bodenseitige Kappenöffnung umgebenden Rand die mit der Verschlußscheibe 4′ am Flaschenhals abgestützte Scheibenanordnung an der dritten Verschlußscheibe 26 randseitig übergreift.

Bevor die Flasche 1' an ihrer Verschlußeinrichtung mit dem Aufsatzteil 10' vereinigt wird, ist eine Auslaßmöglichkeit des Fluids mit der mittleren Verschlußscheibe 6' gesperrt, da sich diese Verschlußscheibe dann in einer gegenüber der Darstellung in Fig.3 um eine Vierteldrehung weitergedrehten Relativlage befindet. Die Auslaßöffnungen 5',5″ der Verschlußscheibe 4' werden dabei durch die Verschlußscheibe 6' abgedeckt, deren Auslaßöffnungen 7',7″ andererseits auf die Durchstecköffnungen 29',30' der beiden Führungsschlitze 29 und 30 der Verschlußscheibe 26 ausgerichtet sind. Wenn nach Abnahme einer ggf. noch vorgesehenen Aufsteckkappe von der Verschlußkappe 3' die Flasche 1' mit den Durchstecköffnungen 29',30' der beiden Führungsschlitze 29,30 auf die Kopfteile 32 der beiden Anschlußröhren 15',15″ aufgesteckt wird, dann fassen die Kopfteile 32 stirnseitig in die Aussparungen 23,24 der Verschlußscheibe 6' ein. Mit einem Drehen der Flasche 1' im Uhrzeigersinn wird daher auch die Verschlußscheibe 6' im gleichen Drehsinn mitgedreht, bis es nach einer Vierteldrehung zu einer Anschlagstellung der Kofpteile 32 an den Enden 29″,30″ der beiden Führungsschlitze 29,30 kommt. Die Flasche 1' ist dann über die Verschlußscheibe 26 an den Anschlußröhren 15',15″ festgelegt. Die Anschlußröhren sind dann auch auf die Auslaßöffnungen 5',7' und 5″,7″ der beiden Verschlußscheiben 4' und 6', axial ausgerichtet. Damit wird ein mit weiteren O-Dichtungsringen 31 an den Stirnenden der Anschlußröhren abgedichteter Auslaß des in der Flasche 1' abgefüllten Fluids hin zu einem Handstück des Dentalgerätes immer dann erhalten, wenn eine mit dem Dentalgerät gesteuerte Zuleitung von Druckluft in der Innere der Flasche vorgenommen wird.

Die vorbeschriebene Verschlußeinrichtung kann bei beiden Ausführungsformen grundsätzlich auch mit jeweils nur einer Auslaßöffnung in den Verschlußscheiben 4 und 6 bzw. 4' und 6' sowie korrespondierend dazu mit nur einem Führungsschlitz in der dritten Verschlußscheibe 26 und mit nur einer Anschlußröhre an dem Aufsatzteil ausgebildet werden, wenn für eine entsprechende Verwendung bei einem Dentalgerät an diese eine Anschlußröhre die Saugleitung einer bei den sog. Mundduschen üblicherweise verwendeten Membran- oder Kolbenpumpe angeschlossen wird, deren weiterführende Druckleitung dann mit dem Handstück zu verbinden wäre. Anstelle der Verbindung mit einem Stift kann die dritte Verschlußscheibe 26 auch durch ein Verschweißen oder Verlöten mit der ersten Verschlußscheibe 4' drehfest verbunden sein, um eine Scheibenanordnung zu erhalten, die auch ohne ein Erfordernis für den Dichtungsring 22 in die Flaschenöffnung äußerst fluiddicht eingepreßt werden kann.

**Patentansprüche**

1.  Verschlußeinrichtung für eine mit einem Fluid gefüllte Flasche (1), bestehend aus
    -   einer ersten Verschlußscheibe (4), welche die Flaschenöffnung abdeckt und wenigstens eine außermittig ausgebildete Auslaßöffnung (5) aufweist;
    -   einer zweiten Verschlußscheibe (6), welche ebenfalls wenigstens eine Auslaßöffnung (7) aufweist, die in einem gleichen Mittenabstand wie die Auslaßöffnung (5) der ersten Verschlußscheibe (4) ausgebildet ist; und
    -   einem Aufsatzteil (10), das durch einen Drehverschluß (2) an dem Flaschenhals festlegbar ist und über eine Anschlußröhre (15) eine relative Drehung der beiden Verschlußscheiben (4,6) vermittelt, um in einer ersten relativen Drehlage eine Abdeckung der Auslaßöffnung (5) der ersten Verschlußscheibe (4) durch die zweite Verschlußscheibe (6) und um in einer zweiten relativen Drehlage eine deckungsgleiche Anordnung der Auslaßöffnungen (5,7) der beiden Verschlußscheiben (4,6) für einen über die Anschlußröhre (15) vermittelten Auslaß des Fluids zu erhalten,

    dadurch **gekennzeichnet,** daß
    -   das Aufsatzteil (10) eine zu den beiden Verschlußscheiben (4,6) relativ drehbare Anordnung aufweist;
    -   die Anschlußröhre (5) eine Ausbildung an dem Aufsatzteil (10) aufweist und eine gemeinsame Drehung der beiden Verschlußscheiben (4,6) relativ zu dem Flaschenhals vermittelt, sobald die beiden Verschlußscheiben bei der Festlegung des Aufsatzteils in die zweite relative Drehlage gedreht sind; und
    -   die beiden Verschlußscheiben (4,6) alternativ zu dem Aufsatzteil (10) durch eine mittels des Drehverschlusses (2) gehaltene Verschlußkappe (3) an dem Flaschenhals festlegbar sind.

2.  Verschlußeinrichtung für eine mit einem Fluid gefüllte Flasche (1'), bestehend aus
    -   einer ersten Verschlußscheibe (4'), welche die Flaschenöffnung abdeckt und wenigstens eine außermittig ausgebildete Auslaßöffnung (5,) aufweist;
    -   einer zweiten Verschlußscheibe (6'), welche ebenfalls wenigstens eine Auslaßöffnung (7') aufweist, die in einem gleichen Mittenabstand wie die Auslaßöffnung (5') der ersten Verschlußscheibe (4') ausgebildet ist; und

- einem Aufsatzteil (10'), das durch einen Drehverschluß (2') an dem Flaschenhals festlegbar ist und über eine Anschlußröhre (15') eine relative Drehung der beiden Verschlußscheiben (4' ,6') vermittelt, um in einer ersten relativen Drehlage eine Abdeckung der Auslaßöffnung (5') der ersten Verschlußscheibe (4') durch die zweite Verschlußscheibe (6') und um in einer zweiten relativen Drehlage eine deckungsgleiche Anordnung der Auslaßöffnungen (5' ,7') der beiden Verschlußscheiben (4' ,6') für einen über die Anschlußröhre (15') vermittelten Auslaß des Fluids zu erhalten,

dadurch **gekennzeichnet,** daß

- das Aufsatzteil (10') eine zu den beiden Verschlußscheiben (4' ,6') relativ drehbare Anordnung aufweist;
- die Anschlußröhre (15') eine Ausbildung an dem Aufsatzteil (10') aufweist und in der zweiten relativen Drehlage der beiden Verschlußscheiben (4' ,6') deren Festlegung an dem Aufsatzteil vermittelt; und
- die beiden Verschlußscheiben (4' ,6') durch eine mittels des Drehverschlusses (2') gehaltene Verschlußkappe (3') an dem Flaschenhals festgelegt sind.

3. Verschlußeinrichtung nach Anspruch 2, dadurch **gekennzeichnet,** daß über der zweiten Verschlußscheibe (6') eine dritte Verschlußscheibe (26) angeordnet ist, die in einem mit den Auslaßöffnungen (5', 7') der beiden anderen Verschlußscheiben (4', 6') übereinstimmenden Mittenabstand wenigstens einen Führungsschlitz (29, 30) aufweist, dessen Schlitzlänge den mit der Anschlußröhre (15') des Aufsatzteils (10') nach Art eines Bajonettverschlusses vermittelten Drehweg der zweiten Verschlußscheibe (6') relativ zu der ersten Verschlußscheibe (4') und der dritten Verschlußscheibe (26) festlegt.

4. Verschlußeinrichtung nach Anspruch 3, dadurch **gekennzeichnet,** daß die dritte Verschlußscheibe (26) mit der ersten Verschlußscheibe (4') drehfest verbunden ist, und daß an einem Kopfteil (32) der Anschlußröhre (15') eine hinterschnittene Ringnut (33) ausgebildet ist, deren Breite mit der Dicke der dritten Verschlußscheibe (26) und deren Kerndurchmesser mit der Breite des Führungsschlitzes (29, 30) übereinstimmen, die kleiner ist als eine Durchstecköffnung (29', 30') für das Kopfteil (32) an dem einen Schlitzende des Führungsschlitzes (29, 30).

5. Verschlußeinrichtung nach Anspruch 3 oder 4, dadurch **gekennzeichnet,** daß die dritte Verschlußscheibe (26) an einem randseitig verlaufenden Flansch (21) der ersten Verschlußscheibe (4') aufliegt, wobei das mit dem Flansch erhaltene Abstandsmaß der ersten und der dritten Verschlußscheibe (4', 26) etwas größer ist als die Dicke der mit dem Flansch (21) zentrierten zweiten Verschlußscheibe (6').

6. Verschlußeinrichtung nach einem der Ansprüche 3 bis 5, dadurch **gekennzeichnet,** daß die drei Verschlußscheiben (4', 6', 26) eine am Flaschenhals abgestützte Anordnung aufweisen und mit einem eine bodenseitige Kappenöffnung umgebenden, die dritte Verschlußscheibe (26) übergreifenden Rand der Verschlußkappe (3') an der Flaschenöffnung festgelegt sind.

7. Verschlußeinrichtung nach Anspruch 5 oder 6, dadurch **gekennzeichnet,** daß die drei Verschlußscheiben (4', 6', 26) mit einem Flansch (21) der ersten Verschlußscheibe (4') in der Flaschenöffnung zentriert sind.

8. Verschlußeinrichtung nach einem der Ansprüche 3 bis 7, dadurch **gekennzeichnet,** daß die Anschlußverbindungen zwischen den Auslaßöffnungen (5', 7') der ersten und der zweiten Verschlußscheibe (4', 6') und die Anschlußverbindung mit der Anschlußröhre (5') des Aufsatzteils (10') durch je einen O-Dichtungsring (25, 31) abgedichtet sind.

9. Verschlußeinrichtung nach einem der Ansprüche 1 bis 8, wobei die erste und die zweite Verschlußscheibe (4, 6; 4', 6') übereinstimmend mit je einer zweiten Auslaßöffnung (5'', 7'') versehen sind, die zu den einen Auslaßöffnungen (5, 5', 7') in einem gleichen Mittenabstand drehversetzt sind und untereinander ebenfalls nur in der zweiten relativen Drehlage der zweiten Verschlußscheibe (6, 6') eine deckungsgleiche Anordnung aufweisen, dadurch **gekennzeichnet,** daß das Aufsatzteil (10, 10') mit einer zweiten Anschlußröhre (15'') versehen ist, die in der zweiten relativen Drehlage der beiden Verschlußscheiben (6, 6') auf die zweiten Auslaßöffnungen (5'', 7'') axial ausgerichtet ist.

10. Dentalgerät, das mit Druck- oder Saugluft zur Versorgung eines Handstückes mit einem Fluid arbeitet, das in einer mittels einer Verschlußeinrichtung nach einem der Ansprüche 1 bis 9 an dem Dentalgerät auswechselbar angeordneten Flasche (1, 1') bevorratet ist, wobei das Aufsatzteil (10, 10') der Verschlußeinrichtung ein Geräteteil bildet und das Handstück eine Anschlußverbindung an die eine Anschlußröhre (15, 15') des Aufsatzteils aufweist.

11. Dentalgerät nach Anspruch 10,
dadurch **gekennzeichnet,** daß über die zweite Anschlußröhre (15'') des Aufsatzteils (10') die Zuleitung von Druckluft in das Innere der mit der Verschlußeinrichtung festgelegten Flasche (1, 1') vermittelt wird.

## Claims

1. Closure device for a bottle (1) filled with a fluid, comprising:

   - a first closure disk (4) covering the opening of the bottle and including at least one eccentrically formed discharge opening (5);
   - a second closure disk (6) which likewise includes at least one discharge opening (7) formed at the same off-center spacing as said discharge opening (5) of said first closure disk (4); and
   - a top assembly (10) adapted to be fixed at the bottle neck by means of a turning lock (2) and transferring a relative rotation of said two closure disks (4, 6) through a connecting pipe (15) so as to cause, in a first relative rotational position, said discharge opening (5) of said first closure disk (4) to be covered by said second closure disk (6) and to establish, in a second relative rotational position, a registry position of said discharge openings (5, 7) of said two closure disks (4, 6) for discharging the fluid through a passage established through said connecting pipe (15),
   characterized in that
   - said top assembly (10) includes a grouping adapted to be rotated relative to one of said two closure disks (4, 6);
   - said connecting pipe (15) is formed at said top assembly (10) and causes said two closure disks (4, 6) to rotate jointly relative to the bottle neck as soon as said two closure disks have been rotated into the second relative rotational position when said top assembly is fixed; and
   - alternatively to said top assembly (10) said two closure disks (4, 6) are adapted to be fixed at the bottle neck by a closure cap (3) secured by means of said turning lock (2).

2. Closure device for a bottle (1') filled with a fluid, comprising:

   - a first closure disk (4') covering the opening of the bottle and including at least one eccentrically formed discharge opening (5');
   - a second closure disk (6') which likewise includes at least one discharge opening (7') formed at the same off-center spacing as said discharge opening (5') of said first closure disk (4'); and
   - a top assembly (10') adapted to be fixed at the bottle neck by means of a turning lock (2') and transferring a relative rotation of said two closure disks (4', 6') through a connecting pipe (15') so as to cause, in a first relative rotational position, said discharge opening (5') of said first closure disk (4') to be covered by said second closure disk (6') and to establish, in a second relative rotational position, a registry position of said discharge openings (5', 7') of said two closure disks (4', 6') for discharging the fluid through a passage established through said connecting pipe (15'),
   characterized in that
   - said top assembly (10') includes a grouping adapted to be rotated relative to one of said two closure disks (4', 6');
   - said connecting pipe (15') is formed at said top assembly (10') and causes said two closure disks (4', 6') to be fixed at said top assembly when said two closure disks are in the second relative rotational position; and
   - said two closure disks (4', 6') are fixed at the bottle neck by a closure cap (3') secured by means of said turning lock (2').

3. Closure device according to Claim 2,
   characterized in that
   above said second closure disk (6') a third closure disk (26) is disposed which includes at least one guiding slot (29, 30) at an off-center spacing in congruence with said discharge openings (5', 7') of said other two closure disks (4', 6'), with the aperture length of said guiding slot determining the rotational displacement of said second closure disk (6') relative to said first closure disk (4') and said third closure disk (26) and with the rotational displacement being imparted by said connecting pipe (15') of said top assembly (10') in the manner of a bayonet-type lock.

4. Closure device according to Claim 3, **characterized** in that said third closure disk (26) is connected to said first closure disk (4') for rotation therewith, and that at an upper segment (32) of said connecting tube (15') an undercut annular groove (33) is formed whose width corresponds to the thickness of said third closure disk (26) and whose root diameter corresponds to the width of said guiding slot (29, 30) which is smaller than a passage opening (29', 30') for said upper segment (32) at one end of the aperture of said guiding slot (29, 30).

5. Closure device according to Claim 3 or 4, **characterized** in that said third closure disk (26) rests on a flange (21) of said first closure disk (4'), which extends on the side of the edge, with the distance of said first and said third closure disks (4', 26), which is achieved with said flange, slightly exceeding the thickness of said second closure disk (6') centered by means of said flange (21).

6. Closure device according to any of Claims 3 to 5, **characterized** in that said three closure disks (4', 6', 26) present an arrangement supported at the bottle neck and are fixed at the opening of the bottle by means of an edge of said closure cap (3') which surrounds said third closure disk (26) and engages over a cap opening at the bottom side.

7. Closure device according to Claim 5 or 6, **characterized** in that said three closure disks (4', 6', 26) are centered in the opening of the bottle by means of a flange (21) of said first closure disk (4').

8. Closure device according to any of Claims 3 to 7, **characterized** in that the connections between said discharge openings (5', 7') of said first and said second closure disks (4', 6) and the connections to said connecting tube (5') of said top assembly (10') are each sealed by one sealing O-ring (25, 31).

9. Closure device according to any of Claims 1 to 8, wherein said first and said second closure disks (4, 6; 4', 6') are each provided with one second discharge opening (5", 7") in registry, said second discharge openings being offset in rotation relative to said first discharge openings (5, 5', 7') by the same center-to-center distance and present an arrangement in registry relative to each other likewise only when said second closure disk (6, 6') is in the second relative rotational position, **characterized** in that said top assembly (10, 10') is provided with a second connecting tube (15") which is axially oriented to said second discharge openings (5", 7") when said two closure disks (6, 6') are in their second relative rotational position.

10. Dental instrument operating on compressed or indraft air to supply a hand-held element with a fluid supplied in a bottle (1, 1') arranged for replacement at the dental instrument by means of a closure device according to any of Claims 1 to 9, wherein said top assembly (10, 10') of said closure device constitutes part of the instrument while the hand-held element includes a connector for connection to one of said connecting tubes (15, 15') of said top assembly.

11. Dental instrument according to Claim 10, **characterized** in that the supply of compressed air into the interior space of the bottle (1, 1') fixed by means of said closure device is established through the second connecting tube (15") of said top assembly (10').

**Revendications**

1. Dispositif de fermeture pour une bouteille remplie d'un fluide (1), comprenant
   - un premier disque d'obturation (4), qui recouvre le goulot de la bouteille et qui présente au moins une ouverture d'échappement à disposition excentrique (5);
   - un second disque d'obturation (6), lequel présente également au moins une ouverture d'échappement (7), aménagée à la même distance entre-centres que l'ouverture d'échappement (5) du premier disque d'obturation (4); et
   - un groupe supérieur (10), qui est fixable au moyen d'une fermeture à vis (2) sur le col de la bouteille et transfert une rotation relative des deux disques d'obturation (4, 6) par un tube de raccordement (15), pour créer, dans une première position, un recouvrement de l'ouverture d'échappement (5) du premier disque d'obturation (4) au moyen du second disque d'obturation (6) en vue de créer, dans une seconde position de rotation, une disposition congruente des ouvertures d'échappement (5, 7) des deux disques d'obturation (4, 6) pour l'échappement du fluide par le tube de raccordement (15),

**caractérisé** en ce

- que le groupe supérieur (10) présente une disposition rotative relativement aux deux disques d'obturation (4, 6);
- que le tube de raccordement (5) présente une configuration audit groupe supérieur (10) et transfert une rotation commune des deux disques d'obturation (4, 6) relativement au col de bouteille, dès que les deux disques d'obturation sont tournés dans la seconde position à la fixation du groupe supérieur position de rotation relative; et
- que les deux disques d'obturation (4, 6) comme alternative au groupe supérieur (10), sont fixables, au moyen d'un capuchon de fermeture (3) retenu au moyen de la fermeture à vis (2), au col de la bouteille.

2. Dispositif de fermeture pour une bouteille remplie d'un fluide (1'), comprenant

- un premier disque d'obturation (4'), lequel recouvre le goulot de la bouteille et présente au moins une ouverture d'échappement (5') aménagée en position excentrique;
- un second disque d'obturation (6'), lequel présente également au moins une ouverture d'échappement (7'), aménagée à la même distance entre-centres que l'ouverture d'échappement (5') du premier disque d'obturation (4'); et
- un groupe supérieur (10'), qui est fixable au moyen d'une fermeture à vis (2') au col de la bouteille et qui transmet, par un tube de raccordement (15'), une rotation relative des deux disques d'obturation (4', 6'), pour établir, dans une première position de rotation relative, un recouvrement du premier disque d'obturation (4') par le second disque d'obturation (6'), et dans une seconde position de rotation relative, une disposition congruente aux ouverture d'échappement (5', 7') des deux disques d'obturation (4', 6') pour l'échappement de fluide établi par le tube de raccordement (15').

**caractérisé** en ce

- que le groupe supérieur (10') présente une disposition de rotation relative aux deux disques d'obturation (4', 6');
- le tube de raccordement (15') présente une formation au groupe supérieur (10') et, à la second position rotative relative desdits deux disques d'obturation (4', 6'), établit leur fixation au groupe supérieur; et
- que les deux disques d'obturation (4', 6') sont fixés par un capuchon de fermeture (3') retenu au moyen de la fermeture à vis (2') au col de la bouteille.

3. Dispositif de fermeture selon la Revendication 2,

**caractérisé** en ce

qu'au-dessus du second disque d'obturation (6') est disposé un troisième disque d'obturation (26), qui présente au moins une fente de guidage (29,30) ayant une distance de centre à centre congruente avec les ouvertures d'échappement (5', 7') dans un des deux autres disques d'obturation (4', 6'), la longueur de la fente déterminant le chemin de rotation du second disque d'obturation (6') relatif au premier disque d'obturation (4') et du troisième disque d'obturation (26), lequel chemin est transmis par le tube de raccordement (15') du groupe supérieur (10') à la manière d'un joint à baïonnette.

4. Dispositif de fermeture selon la Revendication 3,

**caractérisé** en ce

que le troisième disque d'obturation (26) est assemblé pour rotation au premier disque d'obturation (4') par vissage serré, et que dans une partie de tête (32) du tube d'échappement (15') est ménagée une rainure contre-dépouillée, dont la longueur coïncide avec l'épaisseur du troisième disque d'obturation (26), et dont le diamètre du noyau coïncide avec la largeur de la fente de guidage (29, 30), qui est plus petite qu'une ouverture de passage (29', 30') pour la partie de tête (32) à une extrémité de la fente de guidage (29, 30)

5. Dispositif de fermeture selon la Revendication 3 ou 4,

**caractérisé** en ce

que le troisième disque d'obturation (26) est appliqué contre une bride (21) s'étendant côté bord du premier disque d'obturation (4'), la mesure de distance obtenue par la bride du premier et du troisième disque d'obturation (4', 26') étant un peu supérieure à l'épaisseur du second disque d'obturation (6') centré avec la bride (21).

6. Dispositif der fermeture selon une quelconque des Revendications 3 à 5,
**caractérisé** en ce
que les trois disques d'obturation (4', 6', 26') présentent une disposition appuyée au col de la bouteille et sont fixés au goulot de la bouteille par un rebord du capuchon de fermeture (3') entourant une ouverture de capuchon côté de fond et chevauchant le troisième disque d'obturation (26).

7. Dispositif de fermeture selon la Revendication 5 ou 6,
   **caractérisé** en ce
   que les trois disques d'obturation (4', 6', 26') sont centrés par la bride (21) du premier disque d'obturation (4') dans le goulot de la bouteille.

8. Dispositif de fermeture selon une quelconque des Revendications 3 à 7,
   **caractérisé** en ce
   que chacun des jonctions de raccordement entre les ouvertures d'échappement (5', 7') du premier et du second disque d'obturation (4', 6') et de la jonction de raccordement audit tube de raccordement (5,) dudit groupe supérieur (10') est étanchéifié par un joint d'étanchéité en forme d'O (25, 31).

9. Dispositif der fermeture selon une quelconque des Revendications 1 à 8, dans lequel le premier et le second disque d'obturation (4, 6; 4', 6') en coïncidence sont chacun muni d'une seconde ouverture d'échappement (5", 7") en déport rotative à la même distance entre-centres relativement auxdites premierères ouvertures d'échappement (5, 5', 7') et présentant entre-elles une disposition congruente seulement à la seconde position de rotation relative du second disque d'obturation (6, 6'),
   **caractérisé** en ce
   que le groupe supérieur (10, 10') est muni d'un second tube d'échappement (15"), qui, à la seconde position de rotation relative des deux disques d'obturation (6, 6'), est axialement orienté sur les secondes ouvertures d'échappement (5", 7").

10. Instrument dentaire qui travaille à air comprimé ou à air aspiré pour l'amenée d'un fluide à une pièce à main, qui est stocké dans une bouteille (1, 1') disposée, pour être interchangeable, au moyen d'un dispositif de fermeture selon une quelconque des Revendication 1 à 9, à un instrument dentaire, dans lequel le groupe supérieur (10, 10') du dispositif de fermeture forme un élément de l'instrument et la pièce à main présente une jonction de raccordement au premier tube d'échappement (15, 15') du groupe supérieur.

11. Instrument dentaire selon la Revendication 10,
    **caractérisé** en ce
    que l'amenée de l'air comprimé se fait par le second tube d'échappement (15") du groupe supérieur (10') à l'intérieur de la bouteille (1, 1') fixée au moyen du dispositif de fermeture.

FIG.1

FIG. 2

FIG. 3